# EUROPEAN PATENT SPECIFICATION

(11) **EP 1 296 905 B1**
(45) Date of publication and mention of the grant of the patent: **28.12.2005**
(21) Application number: 01900217.9
(22) Date of filing: 19.01.2001
(51) Int. Cl.: C04B 7/43, C04B 7/60, F27B 7/20, F27D 13/00

(54) **METHOD AND APPARATUS FOR MANUFACTURING CEMENT CLINKER FROM PARTICULATE CEMENT RAW MATERIAL**
VERFAHREN UND VORRICHTUNG ZUR HERSTELLUNG VON ZEMENTKLINKERN AUS PARTIKULÄREM ZEMENT ROHMATERIAL
PROCEDE ET APPAREIL DE FABRICATION DE CIMENT NON BROYE A PARTIR DE MATIERES PREMIERES A BASE DE CIMENT PARTICULAIRE

(30) Priority: 30.03.2000 DK 200000531
(43) Date of publication of application: 02.04.2003
(73) Proprietor: FLSmidth A/S, 2500 Valby (DK)
(72) Inventor: HUNDEBÖL, Sören, DK-9550 MARIAGER (DK)
(74) Representative: Johansson, Lars-Erik
(86) International application number: PCT/IB2001/000054
(87) International publication number: WO 2001/072654

(56) References cited:
- EP-A1- 0 524 886
- GB-A- 1 441 733
- US-A- 3 923 536
- US-A- 4 511 333
- US-A- 5 269 637

## Description

The present invention relates to a method for manufacturing cement clinker from particulate cement raw material, by which method fresh raw material is preheated and possibly precalcined in a suspension preheater subject to heat exchange with hot exhaust gases, preheated and possibly precalcined material is finally calcined and burned into clinker in a rotary kiln, hot clinker from the rotary kiln is cooled off in a cooler and dust is separated from the exhaust gases from the preheater in a filter arrangement. The invention also relates to an apparatus for carrying out the method according to the invention.

Methods and apparatuses of the aforementioned kind are prior art.

Essentially all cement raw material mixtures contain at least small quantities of Cl, K, Na and S, or such elements are added with the input fuel. In the burning zone of the kiln, there will be an evaporation of the various combinations of such elements, e.g. KCl, NaCl and KOH, whereas the sulphur will be gaseous in the form of SO₂. At the cold end of the rotary kiln and in the smoke chamber or kiln riser duct there may be a condensation of various salts which will be present in the molten state given the prevailing temperatures of 900-1100°C. Formation of sulphates may also occur. The salts act as a binder for the dust which will inevitably be present, and massive coatings may be formed, with attendant risk of blockage in the kiln riser duct. Removement of the coatings may necessitate suspension of operation, and the lining may be damaged either due to a reaction with the coatings or as a result of mechanical damage sustained during the clean-up operation.

Up to this point in time, it has been common practice to introduce the preheated raw material into the kiln riser duct immediately after the discharge of exhaust gases from the rotary kiln since this would ensure that the salts are captured on the substantial surface of the raw material instead of on the walls. However, it may be difficult to achieve distribution of the preheated raw material in the exhaust gases across the entire cross-sectional area of the kiln riser duct. The reason for this is that the raw material is fed, via a downpipe, from the next-to-lowermost cyclone, thus preventing it from attaining the velocity which is necessary to ensure distribution across the entire cross-sectional area which may have a width of several metres.

From US patent No. 4.002.420 and US patent No. 4.108.593 methods and apparatuses are known where hot raw material is extracted from the next-to-lowermost cyclone stage of the cyclone preheater and is introduced into the exhaust gases in the material inlet end of the kiln. Hereby is obtained a lowering of the temperature of the kiln gases, and thus certain condensation of undesirable vapours, such as alkali, chlorine and sulphur vapours, thereby reducing the problem of coatings in the kiln riser duct. However, the achieved reduction of coatings has proved to be insufficient. This may be ascribable to several factors. One explanation could be that the temperature is not reduced to sufficient extent and not with the speed required to ensure condensation of the vapours on the raw material particles in the exhaust gases instead of on the walls of the riser duct. Another explanation could be that the distribution of the raw material does not take place in sufficient degree of homogeneity across the cross-sectional area of kiln and/or that the specific surface area of the raw material is insufficient.

A further general disadvantage of using preheated raw meal is that it will often contain salts in condensed form, and, at the prevailing temperatures, such salts may cause the particles to form lumps, thereby reducing the effective surface area for capturing the salts contained in the kiln gases.

In the future, coatings in the kiln riser duct are expected to be a major problem because of the increase in the thermal loading of the kilns, while, at the same time, the kilns are shortened so that they can be supported by two piers instead of three.

It is the objective of the present invention to provide a method as well as an apparatus for manufacturing cement clinker by means of which the aforementioned problems in terms of coatings in the kiln riser duct are substantially reduced.

This is achieved by a method of the kind mentioned in the introduction, and being distinguished in that dust from the filter arrangement is introduced into the material inlet end of the rotary kiln in a direction which is contrary to the flow direction of the kiln gases. The temperature of the filter dust is typically less than 300°C and may be appropriately injected with the aid of pressurized gas into the material inlet end of the rotary kiln using means comprising a lance which terminates in the smoke chamber of the rotary kiln or in the rotary kiln itself, and extending substantially parallel to the longitudinal axis of the rotary kiln.

Hereby is obtained a significant reduction of coatings on the walls of the riser duct. The underlying cause is partly that the temperature of the filter dust is lower than that of the preheated raw material, thereby allowing it to absorb a greater amount of condensation heat, and partly that the filter dust constitutes the finest fraction of the raw material, which means that it has a substantial surface area, and partly that the filter dust is injected in a direction which is contrary to the flow direction of the kiln gases, ensuring even distribution in the kiln gases across the entire cross-section of the kiln.

Up to this point in time, it has been standard practice to blend the filter dust into the raw material mixture prior to its introduction into the preheater. By extracting at least some of the filter dust and introducing it into the material inlet end of the rotary kiln as proposed according to the present invention will lead to a moderate reduction in the efficiency of the heat exchange process in the preheater.
However, this immediate disadvantage is compensated by the fact that the raw material will attain better powder properties in the cyclones when the content of filter dust is reduced. As a result, there will be a smaller internal dust circulation in the preheater, thus enhancing the efficiency of the preheater, and downtime due to cyclone blockages is also expected to decrease. Furthermore, the loading of the filter in terms of tonnes of dust per hour to be collected by the filter will be reduced, generating savings as far as the dust conveying devices are concerned.

According to the invention, it amy be preferred to utilize the entire filter dust volume and not just a partial volume as a means of combatting coatings by injecting it into the material inlet end of the rotary kiln. An important spin-off benefit is thus achieved. Thus, by injecting the filter dust deep within the kiln system it will easier to control the clinker chemistry. Ordinarily, the composition of the filter dust exhibits deviations in relation to the rest of the raw material, and may, for example, have an excessive lime content, for example up to 200 in LSF. If the filter dust is returned to the raw material silo as previously practised, it will be necessary to ensure effective blending, with the primary aim being to maintain a raw material composition deviating somewhat from that which is necessary for the clinker. However, if it is preferred to inject the entire filter dust volume into the kiln, the composition of raw material needs only to be adjusted to extent where it deviates slightly - corresponding to the ash content in the fuels - from the desired clinker chemistry. In this context, it is a foregone conclusion that the raw mill plant comprises means for separating the cement raw materials from the exhaust gases which are subsequently vented to the filter arrangement for final dedusting. Whenever the filter arrangement is also used for separating the cement raw materials, it is preferred, to maximum practicable extent, that the finest filter fraction(s) be used for injection into the rotary kiln.

According to the present invention, it will be possible to introduce cold raw material and/or flyash simultaneously with the filter dust.

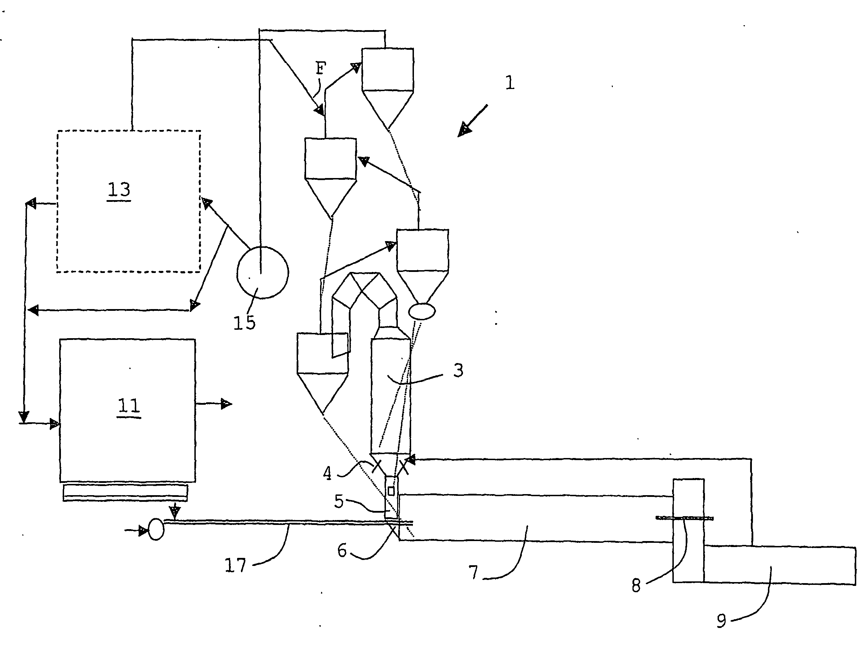

The invention will now be explained in further details with reference to the drawing, being diagrammatical, and its only figure shows a plant according to the invention for manufacturing cement.

The figure depicts a plant for manufacturing cement which comprises a multistage suspension preheater 1, a calciner 3, which is fed with fuel via a number of burners 4 and combustion air via a kiln riser duct 5 and a smoke chamber 6, a rotary kiln 7, which is fed with fuel via a burner 8, a clinker cooler 9 and a filter arrangement 11.

Raw material from an unspecified mill department 13 is introduced into the preheater 1 at F. From here it is conducted in counter-flow to the hot exhaust gases from the rotary kiln 7 down through the preheater 1 and the calciner 3. From the separating cyclone of the calciner 3 the calcined raw material is directed to the rotary kiln 7 in which it is burned into cement clinker which is subsequently cooled in the cooler 9. The kiln gases travel in the opposite direction from the cooler 9 through the rotary kiln 7 in which it is heated and continues up through the smoke chamber 6, the kiln riser duct 5, the calciner 4 and the preheater 1, and it is drawn through the kiln system by means of a fan 15. During the preheating process, it is inevitable that a portion, particularly the finest part of the raw materials, is not effectively separated in the cyclones of the preheater, instead being entrained in the exhaust gases, and, via the fan 15 and possibly the mill department, ending up in the filter arrangement 11.

To eliminate the problem mentioned in the introduction in terms of coatings in the kiln riser chamber 5, it is proposed according to the invention to introduce dust from the filter arrangement 11 into the material inlet end of the rotary kiln 7. The filter dust may be appropriately injected with the aid of pressurized gas into the material inlet end of the rotary kiln 7 by means of a lance 17 which is terminated in the smoke chamber 6 of the rotary kiln or in the rotary kiln 7 itself, and extending substantially parallel to the longitudinal axis of the rotary kiln.

So, during the operation of the plant according to the invention dust from the filter arrangement 11 is injected into the kiln 7 in counterflow to the kiln gases.
Normally, the dust will be cooled down to a temperature of less than 300°C and often as low as 100 to 150°C in the filter arrangement 11, and, furthermore, it will be present in an amount sufficient to ensure proper cooling of the kiln gases in the material inlet end of the rotary kiln 7. The injection of the filter dust may be controlled in order to obtain the optimum cooling of the kiln gases depending on which salts are present in the gases. The injection of the filter dust entails that the temperature of the kiln gases in the material inlet end of the kiln 7 may be cooled down from the range 900 to 1200°C to a range about 830 to 850°C, which is the decarbonization temperature of the main material component calcium carbonate, thus resulting in the condensation of the salts on the surface of the fine filter dust particles.

The invention has been field-tested at an operating cement plant and as a result of the test the need to perform clean-out work in the riser duct 5 was reduced from once every 8 hours to once a week.

## Claims

1. A method for manufacturing cement clinker from particulate cement raw material, by which method fresh raw material is preheated and possibly precalcined in a suspension preheater (1, 3) subject to heat exchange with hot exhaust gases, preheated and possibly precalcined material is finally calcined and burned into clinker in a rotary kiln (7), hot clinker from the rotary kiln is cooled off in a cooler (9) and dust is separated from the exhaust gases from the preheater in a filter arrangement (11) being **characterized in that** dust from the filter arrangement (11) is introduced into the material inlet end of the rotary kiln (7) in a direction which is contrary to the flow direction of the kiln gases

2. A method according to claim 1, being **characterized in that** the entire filter dust volume from the filter arrangement (11) is introduced into the material inlet end of the rotary kiln (7) in a direction which is contrary to the flow direction of the kiln gases.

3. A method according to claim 1 or 2, being **characterized in that** the filter dust is injected into the rotary kiln (7) by means of pressurized gas.

4. A method according to claim 1 or 2, being **characterized in that** cold raw material and/or flyash is introduced simultaneously with the filter dust.

5. A plant for carrying out the method according to claim 1 comprising a multistage suspension preheater (1), a calciner (3) with a number of burners (4), a kiln riser duct (5), a smoke chamber (6), a rotary kiln (7) with a burner (8), a clinker cooler (9) and a filter arrangement (11), being **characterized in that** it also comprises means (17) for introducing dust from the filter arrangement (11) into the material inlet end of the rotary kiln (7) in a direction which is contrary to the flow direction of the kiln gases.

6. A plant according to claim 5, being **characterized in that** the means (17) of introduction comprise a lance which is terminated in the smoke chamber (6) of the rotary kiln or in the rotary kiln (7) itself, and which extends substantially parallel to the longitudinal axis of the rotary kiln.

## Patentansprüche

1. Verfahren zur Herstellung von Zementklinkern aus partikulärem Zement-Rohmaterial, wobei bei dem Verfahren frisches Rohmaterial vorgewärmt wird und möglicherweise vorgeglüht wird in einem Hänge-Anwärmer (1, 3), unterworfen einem Wärmeaustausch mit heißen Abgasen, angewärmtes und möglicherweise vorgeglühtes Material schließlich geglüht und in einem Drehofen (7) zu Klinkern gebrannt wird, heiße Klinker von dem Drehofen in einem Kühler (9) abgekühlt werden und Staub von den Abgasen von dem Anwärmer in einer Filteranordnung (11) getrennt wird, **dadurch gekennzeichnet, dass** Staub von der Filteranordnung (11) in das Materialeinlassende des Drehofens (7) in einer Richtung eingeführt wird, welche entgegengesetzt zu der Flussrichtung der Ofengase ist.

2. Ein Verfahren gemäß Anspruch 1, **dadurch gekennzeichnet, dass** das gesamte Filterstaub-Volumen von der Filteranordnung (11) in das Materialeinlassende des Drehofens (7) in einer Richtung eingeführt wird, welche entgegengesetzt zu der Flussrichtung der Ofengase ist.

3. Ein Verfahren gemäß Anspruch 1 oder 2, **dadurch gekennzeichnet, dass** der Filterstaub mittels unter Druck stehendem Gas in den Drehofen (7) eingepresst wird.

4. Ein Verfahren gemäß Anspruch 1 oder 2, **dadurch gekennzeichnet, dass** kaltes Rohmaterial und/oder Flugasche gleichzeitig mit dem Filterstaub eingeführt wird.

5. Eine Einrichtung zur Durchführung des Verfahrens gemäß Anspruch 1, umfassend einen Mehrstufen-Hänge-Anwärmer (1), einen Glüher (3) mit einer Anzahl von Brennern (4), eine Ofen-Steigleitung (5), eine Rauchkammer (6), einen Drehofen (7) mit einem Brenner (8), einen Klinker-Kühler (9) und eine Filteranordnung (11), **dadurch gekennzeichnet, dass** sie auch Mittel (17) aufweist zur Einführung von Staub von der Filteranordnung (11) in das Materialeinlassende des Drehofens (7) in einer Richtung, welche entgegengesetzt zu der Flussrichtung der Ofengase ist.

6. Eine Einrichtung gemäß Anspruch 5, **dadurch gekennzeichnet, dass** die Einführungsmittel (17) ein Strahlrohr umfassen, welches in der Rauchkammer (6) des Drehofens oder in dem Drehofen (7) endet, und welches sich im Wesentlichen parallel zu der Längsachse des Drehofens erstreckt.

## Revendications

1. Procédé de fabrication de scories de ciment à partir de matière première à base de ciment sous forme de particules, dans lequel une matière première fraîche est préchauffée et est éventuellement pré-calcinée dans un préchauffeur à suspension (1, 3) soumis à un échange de chaleur avec des gaz d'échappement chauds, le matériau préchauffé et éventuellement pré-calciné est finalement calciné et brûlé dans un four rotatif (7) pour donner des scories, les scories chaudes provenant du four rotatif sont refroidies dans un refroidisseur (9) et de la poussière est séparée des gaz chauds d'échappement provenant du pré-chauffeur dans un système de filtre (11), **caractérisé en ce que** la poussière provenant du système de filtre (11) est introduite dans l'extrémité d'entrée de matériau du four rotatif (7) dans une direction qui est contraire à la direction d'écoulement des gaz du four.

2. Procédé selon la revendication 1, **caractérisé en ce que** le volume entier de poussière de filtre provenant du système de filtre (11) est introduit dans l'extrémité d'entrée de matériau du four rotatif (7) dans une direction qui est contraire à la direction d'écoulement des gaz du four.

3. Procédé selon la revendication 1 ou la revendication 2, **caractérisé en ce que** la poussière de filtre est injectée dans le four rotatif (7) au moyen de gaz sous pression.

4. Procédé selon la revendication 1 ou la revendication 2, **caractérisé en ce que** de la matière première froide et/ou de la cendre volante est introduite simultanément à la poussière de filtre.

5. Installation pour la mise en oeuvre du procédé selon la revendication 1, comprenant un pré-chauffeur à suspension multi-étages (1), un four à calciner (3) comprenant un certain nombre de brûleurs (4), un conduit (5) de colonne montante de four, une chambre à fumées (6), un four rotatif (7) avec un brûleur (8), un refroidisseur de scories (9) et un système de filtre (11), **caractérisée en ce qu'**elle comprend également des moyens (17) pour introduire de la poussière provenant du système de filtre (11) dans l'extrémité d'entrée de matériau du four rotatif (7) dans une direction qui est contraire à la direction d'écoulement des gaz du four.

6. Installation selon la revendication 5, **caractérisée en ce que** les moyens d'introduction (17) comprennent une lance qui se termine dans la chambre à fumées (6) du four rotatif ou dans le four rotatif (7) lui-même, et qui s'étend substantiellement parallèlement à l'axe longitudinal du four rotatif.
